# EUROPEAN PATENT SPECIFICATION

(11) **EP 3 083 387 B1**
(45) Date of publication and mention of the grant of the patent: **26.09.2018**
(21) Application number: 14824863.6
(22) Date of filing: 22.12.2014
(51) Int. Cl.: B63B 1/06, B63B 35/08

(54) **ICEBREAKING VESSEL**
EISBRECHER
VAISSEAU DE DÉGLAÇAGE

(30) Priority: 20.12.2013 FI 20136314
(43) Date of publication of application: 26.10.2016
(73) Proprietor: Aker Arctic Technology Inc., 00980 Helsinki (FI)
(72) Inventor: SUOJANEN, Reko-Antti, FI-00200 Helsinki (FI); MATTSSON, Tom, FI-00150 Helsinki (FI); HAMBERG , Karl, verstorben (FI)
(74) Representative: Berggren Oy, Helsinki & Oulu
(86) International application number: PCT/FI2014/051046
(87) International publication number: WO 2015/092154

(56) References cited:
- AT-B- 137 513
- FR-A- 1 528 683
- US-A- 3 850 125
- US-A- 4 550 673

## Description

### Technical field

The present invention relates to an icebreaking vessel for operation in a body of water with a water surface at sea level, which vessel includes a hull with a bottom, a bow part and a stern part, which bow part comprises a forward inclined upper bow portion, a bulbous lower bow portion with a bulb root section at a given position of the bulbous lower bow portion in a longitudinal direction of the vessel, and an intermediate bow portion between the forward inclined upper bow portion and the bulbous lower bow portion, which icebreaking vessel is designed with a construction waterline, an upper ice waterline and a lower ice waterline, according to the preamble of claim 1. The present invention also relates to a method for operating an icebreaking vessel according to the preamble of claim 6.

### Background art

In marine vessels it is known that resistance, and consequently power demand and fuel consumption can be reduced by installing a bulb-shaped body, a so-called bulbous bow at the bow of the vessel. The bulbous bow, when appropriately designed, influences the wave system generated by the vessel so that energy loss is reduced. An example can be found in e.g. EP 2 391 533 B1 and US 4,550,673, in which the bulbous bow is designed for open water conditions.

Traditionally, bulbous bows have not been considered suitable for vessels operating in ice conditions. However, in recent times vessels intended for operation in ice infested waters, i.e. in ice conditions have been designed with bulbous bows. Examples may be found in e.g. KR 20120139268, KR 20080107070, KR 20060039270 and FR 1528683. The designs of these known vessels, however, represent a compromise in view of the desire and need to have a vessel that can be operated both in open water and in ice conditions. Ice conditions represent several constraints to the design of an advantageous hydrodynamic form of a bulbous bow. As a consequence, the performance of known vessels with bulbous bows is neither comparable to a well-designed bulbous bow for open water nor to a well-designed icebreaking bow. US 3,850,125 discloses a specially designed icebreaking vessel with a throat configuration at the bow for crushing ice in an upward and downward pitching movement.

### Summary of invention

An object of the present invention is to overcome the drawbacks of background art and to achieve a vessel with efficient ice breaking capacity in difficult, moderate and light ice conditions and also to ensure that operational efficiency in open water is not impaired. This object can be attained by means of an ice breaking vessel according to claim 1.

The basic idea of the invention is to design a marine vessel that has an efficient performance when required for icebreaking operation in various ice conditions and that has an efficient performance when required for operation in open water. The departing point of such a design is the construction waterline, whereby the vessel is designed so that an upper surface of the bulbous lower bow portion is at or in the vicinity of the water surface when the vessel operates at the construction water line of the vessel. According to the invention, a lower surface of the bulbous lower bow portion is arranged to penetrate the water surface when the vessel operates at the lower ice water line of the vessel and the forward inclined upper bow portion is arranged to penetrate the water surface when the vessel operates at the upper ice water line of the vessel.

The advantages of the present invention can be given as follows.

When the vessel operates at the construction waterline, the vessel is loaded and without trim. In this floating position of the vessel, the upper surface of the bulbous lower bow portion is designed to be at or in the vicinity of the water surface. In practice the definition "at or in the vicinity" defines that the upper surface of the bulbous lower bow portion is wholly or partly at the water surface, or slightly below or slightly above the water surface. In ice conditions, the upper surface of the bulbous lower bow portion advantageously is designed to engage with ice or ice sheets encountered in light and moderate ice conditions. In other words, in this floating position the vessel is capable and optimized to operate in light and moderate ice conditions.

When the vessel operates at the lower ice waterline, the vessel, e.g., if it is a cargo carrying vessel, is without cargo and operates in a ballast condition. Alternatively, to obtain this floating position, the vessel may be intentionally trimmed by shifting ballast, consumables or possible cargo. In this floating position the vessel is able to operate in light and moderate ice conditions in a sufficiently adequate manner.

When the vessel operates at the upper ice waterline, the vessel operates with the bow part trimmed down. In this floating position the vessel is capable and optimized to operate in difficult ice conditions. The trimmed position may be achieved e.g. by cargo or ballast allocation or shifting of liquids.

Further according to the present invention, a cross-sectional area of the bulb root section of the bulbous lower bow portion at the given position is smaller than a cross-sectional area of the bulbous lower bow portion at a first position forward of the given position.

The given design of the bulbous lower bow portion, i.e. the smaller cross-sectional area of the bulb at the bulb root section as compared to the cross-sectional area of the bulb in front of the bulb root section, further improves the suitability and the operational efficiency of the vessel in ice conditions. This allows ice or chunks of broken ice to easily travel aft and backwards along the hull of the vessel.

Also, according to the present invention, a cross-sectional area of the bulb root section of the bulbous lower bow portion at the given position is larger than a cross-sectional area of the bow part under the construction water line at a second position aft of the given position. This further facilitates the travel of ice or chunks of broken ice aft and backwards along the hull of the vessel.

In an advantageous embodiment of the invention, an angle between the forward inclined upper bow portion and the sea level when the vessel operates at the upper ice water line is at the most 40°. This improves the icebreaking capacity of the vessel in difficult ice conditions. In this respect, the angle is preferably in a range between 10 ... 40°.

When the vessel operates at the upper ice water line the forward inclined upper bow portion intersects with the sea level at a third position in the longitudinal direction of the vessel. In order to improve the passage of the vessel in the body of water, an angle between the form of the bow part and a vertical plane at a center line of the vessel at the third position in the longitudinal direction of the vessel is at least 75°.

To further improve the operation of the icebreaking vessel, it is advantageous that an angle between the form of the bow part and a vertical plane at a center line of the vessel at a position half-way between the third position and the given position in the longitudinal direction of the vessel is at the most 60°.

Hull, bottom, bow, bulb, bulbous bow and stern represent conventional terminology with regard to marine vessels. The bulb root section is the vertical cross-section of the bulb at the intersection point where the lower end of the inclined upper bow portion, i.e. the intermediate bow portion intersects with the protruding lower bulbous bow portion, i.e. the bulb. In the absence of a clear intersection point, it would be the aft-most inflection point of a transverse profile of the intermediate bow portion. The length of the vessel is the length of the vessel in a longitudinal direction of the vessel, between the bow part and the stern part. The breadth of the vessel means the largest transversal breadth of the vessel at the construction water line.

The construction waterline defines the waterline on the basis of which the vessel is designed for its principal operation e.g. in relation to loading, propulsion power, speed, etc. The upper ice waterline defines the highest waterline at which the vessel is intended to operate in ice. The line may be a broken line. The lower ice waterline defines the lowest waterline at which the vessel is intended to operate in ice. The line may be a broken line. These waterlines represent the extremities of different draughts at which the vessel is capable of operating in ice conditions.

Icebreaking vessels are usually assigned to various ice classes which define ice conditions in which such vessels have the capacity to operate. Ice conditions are basically defined as difficult, moderate or light. Expressions like fore, forward, in the front relate to the bow direction of the longitudinal direction of the vessel. Expressions like aft, backward, at the end relate to the stern direction of the longitudinal direction of the vessel. When the vessel operates in ice conditions, the vessel, as well as its bow part, will engage with ice or an ice field and thus be subject to and exposed to an ice load from the ice or the ice field in the surrounding body of water.

The advantageous features of the icebreaking vessel are defined in claims 2-5. The method for operating the icebreaking vessel is defined in claim 6.

### Brief description of drawings

In the following the invention will be described, by way of example only, with reference to the accompanying schematic drawings, in which
Figure 1 illustrates a side view of an icebreaking vessel according to the invention,
Figure 2 illustrates the bow part of the icebreaking vessel from below,
Figure 3 a side view of the bow part of the icebreaking vessel,
Figure 4 illustrates a cross-section of the hull of the icebreaking vessel below a waterline, a so-called frame area curve,
Figure 5 illustrates an enlarged detail of Figure 4, and
Figures 6 and 7 illustrate transversal sections of the forward part of the icebreaking vessel.

### Detailed description

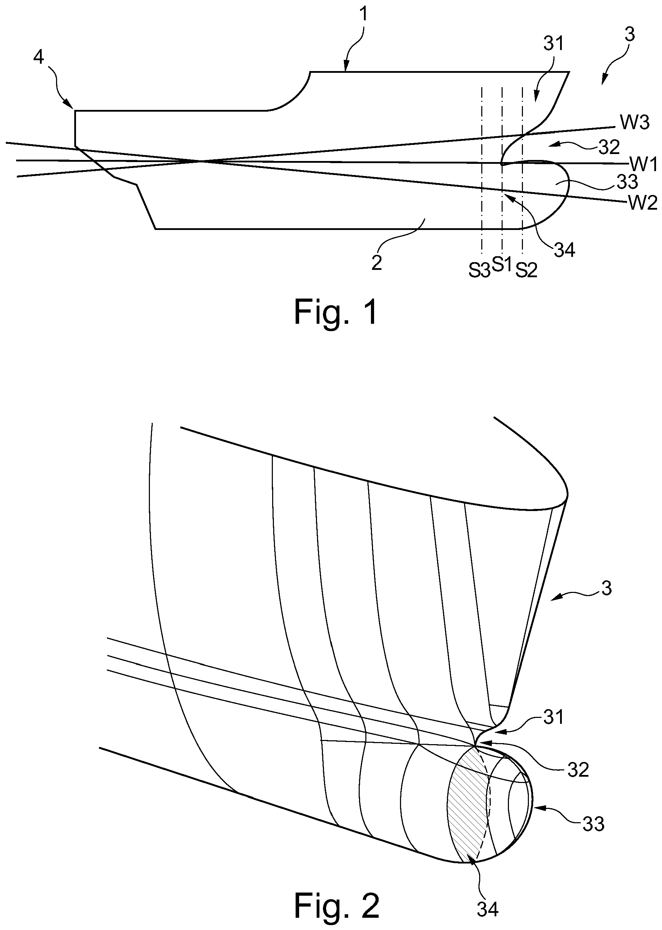

In Figure 1 the icebreaking vessel is indicated by reference numeral 1. The icebreaking vessel 1 includes a hull with a bottom 2, a bow part 3 and a stern part 4. The bow part 3 includes a forward inclined upper bow portion 31, a bulbous lower bow portion 33 with a bulb root section 34 at a given position S1 of the bulbous lower bow portion in a longitudinal direction of the vessel, and an intermediate bow portion 32 between the forward inclined upper bow portion 31 and the bulbous lower bow portion 33. The icebreaking vessel 1 is designed with a construction water line W1, an upper ice water line W3, and a lower ice water line W2. Figure 2 provides a three-dimensional view of the bow part 3 as described above.

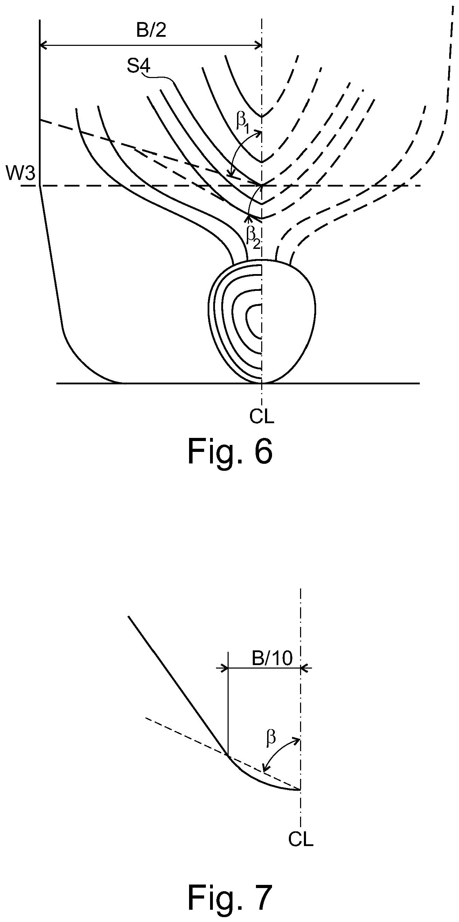

The breadth of the icebreaking vessel 1 is indicated by reference sign B as shown in Figure 6 and Figure 7. The breadth B means the largest transversal breadth of the icebreaking vessel 1 at the construction water line W1. The relevance of the breadth B in view of the design of the icebreaking vessel 1 will be discussed more in detail below in connection with Figure 6 and Figure 7.

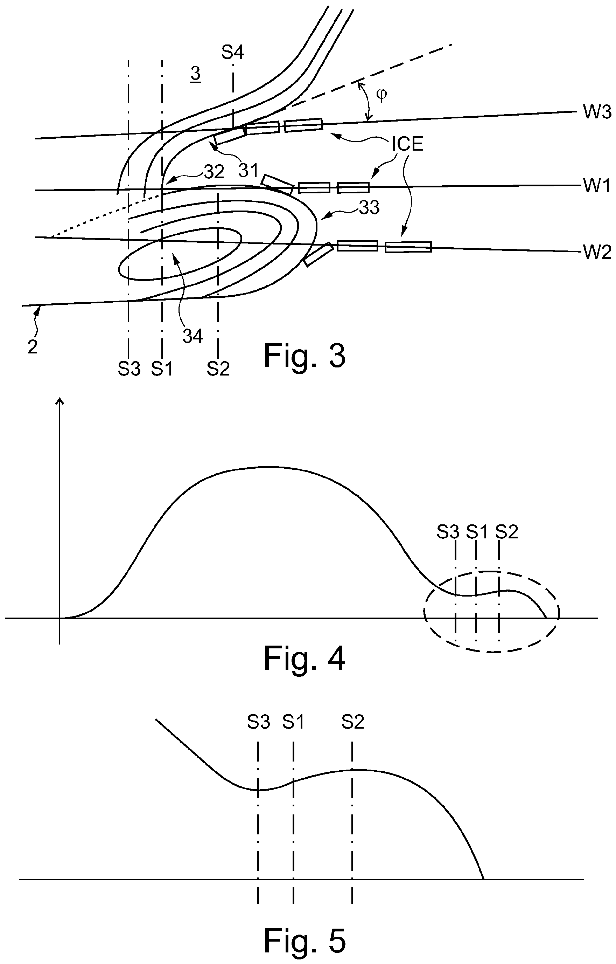

Figure 3 shows the bow part 3 more in detail.

Figure 3 illustrates that an upper surface of the bulbous lower bow portion 33 is arranged to be at or in the vicinity of the water surface when the vessel operates at the construction water line W1 of the icebreaking vessel 1. In practice this means that the upper surface of the bulbous lower bow portion is at or in the vicinity of the water surface. Normally, in this floating position, the icebreaking vessel 1 is loaded and without trim. In ice conditions (ice is indicated by ICE), the upper surface of the bulbous lower bow portion 33 engages with ice or ice sheets and breaks the ice from the underside. In this floating position the vessel is capable and optimized to operate in light and moderate ice conditions.

When the icebreaking vessel 1 operates at the lower ice water line W2 the lower surface of the bulbous lower bow portion 33 is arranged to penetrate the water surface. At this floating position the vessel is able to operate in light and moderate ice conditions in a sufficiently adequate manner. Figure 3 illustrates how the lower surface of the bulbous lower bow portion 33 engages with the ice and breaks it downwards under the bulbous lower bow portion.

In the case of a cargo carrying vessel, the vessel would in this floating position be without cargo and be in a ballast condition. Alternatively, the vessel can be intentionally trimmed by shifting ballast, consumables or possibly cargo.

When the icebreaking vessel 1 operates at the upper ice water line W3, the vessel operates with the bow part trimmed down. The trimmed position can be achieved e.g. by cargo or ballast allocation or shifting of liquids. At this floating position the vessel is capable and optimized to operate in difficult ice conditions. The forward inclined upper bow portion 31 thus breaks ice downwards and sideways more or less in a traditional manner as the icebreaking vessel 1 moves forward.

The icebreaking vessel 1 is thus operated in three different floating positions which are advantageous in various ice conditions: the upper surface of the bulbous lower bow portion 33 is kept at or in the vicinity of the water surface when the vessel operates at the construction water line W1 of the vessel; the lower surface of the bulbous lower bow portion 33 penetrates the water surface when the vessel operates at the lower ice water line W2 of the vessel; and the forward inclined upper bow portion 31 penetrates the water surface when the vessel operates at the upper ice water line W3 of the vessel.

In the floating position, when the icebreaking vessel 1 operates at the upper ice water line W3, it is advantageous that an angle ϕ between the forward inclined upper bow portion 31 and the sea level (indicated in Figure 3 as the upper ice water line W3) is at the most 40°. The angle ϕ thus represents the degree of inclination of the forward inclined upper bow portion 31. As illustrated in Figure 3 the angle ϕ of inclination of the forward inclined upper bow portion 31 is relevant at least for the lower part of the forward inclined upper bow portion 31, i.e. the part of the forward inclined bow portion that is closer to the sea level. The upper part of this bow portion can have, and is shown in Figure 1 and Figure 3 to have, another degree of inclination.

This configuration further improves the ice breaking capacity of the icebreaking vessel 1 in difficult ice conditions. In any case, it is preferable that the angle ϕ is in the range of 10 ... 40°. As shown in Figure 3, the forward inclined upper bow portion 31 intersects with the sea level, which corresponds to the upper ice water line W3 when the vessel is operated in this floating position, at a third position S4 in the longitudinal direction of the icebreaking vessel 1.

Optimizing the icebreaking capacity as such of an icebreaking vessel is of course important, but ice and broken ice also has to be cleared away from the vessel in order to ensure an efficient passage of the vessel in the body of water.

For this purpose, the bow part and the bulbous lower bow portion of the icebreaking vessel 1 according to the present invention has an advantageous design with respect to the profile or transversal projection and the volume distribution in the longitudinal direction of the vessel of the bow part 3 and the bulbous lower bow portion 33. This is illustrated in Figure 4 and Figure 5 with reference to Figure 1 and Figure 3.

Figure 4 illustrates a frame area curve, i.e. a graph showing the transversal sectional area of the hull of the vessel below the construction water line W1. Figure 5 shows an enlarged view of the encircled part of Figure 4. The given position S1, the first position S2 and the second position S3 are indicated in these figures. As will be explained in more detail below, the cross-sectional area at the given position S1 is smaller than the cross-sectional area at the first position S2 and the cross-sectional area at the second position S3 is smaller than the cross-sectional area at the given position S1.

The profile and the longitudinal volume distribution are configured so that the cross-sectional area of the bulb root section 34 of the bulbous lower bow portion 33 at the given position S1 is smaller than a cross-sectional area of the bulbous lower bow portion at a first position S2 in the longitudinal direction of the vessel forward of the given position S1. Such a configuration, i.e. where the bulbous lower bulb portion has a smaller cross-sectional area at the bulb root section than forward of the bulb root section improves the operation of the icebreaking vessel in ice conditions. The flow of ice or chunks of broken ice along the hull in a backwards direction of the icebreaking vessel is facilitated by such a configuration.

Further improvement with regard to the flow of ice or chunks of broken ice backwards along the hull of the icebreaking vessel is achieved by configuring the cross-sectional area of the bulb root section of the bulbous lower bow portion at the given position S1 to be larger than a cross-sectional area of the bow part under the construction water line W1 at a second position S3 in the longitudinal direction of the vessel aft of the given position S1.

When the icebreaking vessel 1 operates at the upper ice water line W3, also the form of the bow part 3 influences the passage of the vessel in a body of water, particularly in ice conditions.

An advantageous design of the bow part 3 for the icebreaking vessel 1 when the vessel operates at the upper ice water line W3 is achieved by configuring the bow part 3 so that an angle β1 between the form of the bow part 3 and a vertical plane at a center line CL of the vessel at the third position S4 in the longitudinal direction of the vessel is at least 75°.

Additionally, it is advantageous that an angle β2 between the form of the bow part 3 and a vertical plane at the center line CL of the vessel at a position half-way between the given position S1 and the third position S4 in the longitudinal direction of the vessel is at the most 60°. It is thus at least preferable, that β1 is larger than β2.

The angles β1 and β2 are indicated in Figure 6. As noted above, reference sign B indicates the breadth of the icebreaking vessel 1, which breadth B is the largest transversal breadth of the vessel at the construction water line W3. The form of the hull 2 of the icebreaking vessel 1, including the form of the bow part 3, can be curved, whereby the angles β1 and β2 cannot be readily measured.

Thus, the angle β1 between the form of the bow part 3 and the vertical plane at the center line CL at the third position S4 is shown as an angle between a broken line extending from the center line CL of the vessel towards the outer side of the vessel, whereby B/2 indicates half of the breadth B of the icebreaking vessel 1.

In a corresponding manner, the angle β2 between the form of the bow part 3 and the vertical plane at the center line CL of the vessel at the position halfway between the given position S1 and the third position S4 is shown as an angle between a broken line extending from the center line CL of the vessel towards the outer side of the vessel.

In view of the above, the angles β1 and β2 are defined based on an angle β as shown in Figure 7, whereby the angle β is defined to be measured as an angle between the form of the bow part 3 and the center line CL of the vessel at a distance of B/10, i.e. at a distance of one tenth from the center line CL of the vessel. At this distance, in other words very close to the center line CL of the vessel, the curvature of the hull is generally more constant.

The drawings and the description related thereto are only intended for clarification of the basic idea of the invention. The invention may vary in detail within the scope of the ensuing claims.

## Claims

1. An icebreaking vessel, which includes a hull with a bottom (2), a bow part (3) and a stern part (4), which bow part (3) includes a forward inclined upper bow portion (31), a bulbous lower bow portion (33) with a bulb root section (34) at a given position (S1) of the bulbous lower bow portion in a longitudinal direction of the vessel, and an intermediate bow portion (32) between the forward inclined upper bow portion and the bulbous lower bow portion, which icebreaking vessel (1) is designed with a construction water line (W1), an upper ice water line (W3) and a lower ice water line (W2), **characterized in that**
- an upper surface of the bulbous lower bow portion (33) is arranged to be at or in the vicinity of the water surface when the vessel operates at the construction water line (W1) of the vessel (1),
- a lower surface of the bulbous lower bow portion (33) is arranged to penetrate the water surface when the vessel operates at the lower ice water line (W2) of the vessel,
- the forward inclined upper bow portion (31) is arranged to penetrate the water surface when the vessel operates at the upper ice water line (W3) of the vessel, and **in that**
- a cross-sectional area of the bulb root section (34) of the bulbous lower bow portion (33) at the given position (S1) is smaller than a cross-sectional area of the bulbous lower bow portion at a first position (S2) in the longitudinal direction of the vessel forward of the given position (S1) and larger than a cross-sectional area of the bow part (3) under the construction water line (W1) at a second position (S3) in the longitudinal direction of the vessel aft of the given position (S1).

2. Icebreaking vessel according to claim 1, **characterized in that** an angle (ϕ) between the forward inclined upper bow portion (31) and the sea level when the vessel operates at the upper ice water line (W3) is at the most 40°.

3. Icebreaking vessel according to claim 2, **characterized in that** the angle (ϕ) is in a range between 10 ... 40°.

4. Icebreaking vessel according to claim 1, **characterized in that** when the vessel operates at the upper ice water line (W3) the forward inclined upper bow portion (31) intersects with the sea level at a third position (S4) in the longitudinal direction of the vessel, and **in that** an angle (β1) between the form of the bow part (3) and a vertical plane at a center line (CL) of the vessel at the third position (S4) in the longitudinal direction of the vessel is at least 75°.

5. Icebreaking vessel according to claim 1 and 4, **characterized in that** an angle (β2) between the form of the bow part (3) and a vertical plane at a center line (CL) of the vessel at a position half-way between the given position (S1) and the third position (S4) in the longitudinal direction of the vessel is at the most 60 °.

6. A method of operating an icebreaking vessel, which includes a hull with a bottom (2), a bow part (3) and a stern part (4), which bow part (3) includes a forward inclined upper bow portion (31), a bulbous lower bow portion (33) with a bulb root section (34) at a given position (S1) of the bulbous bow portion in a longitudinal direction of the vessel, and an intermediate bow portion (32) between said forward inclined upper bow portion and the bulbous lower bow portion, whereby the icebreaking vessel (1) is designed with a construction water line (W1), an upper ice water line (W3) and a lower ice water line (W2), **characterized in that** according to the method
- an upper surface of the bulbous lower bow portion (33) is kept at or in the vicinity of the water surface when the vessel operates at the construction water line (W1) of the vessel,
- a lower surface of the bulbous lower bow portion (33) penetrates the water surface when the vessel operates at the lower ice water line (W2) of the vessel,
- the forward inclined upper bow portion (31) penetrates the water surface when the vessel operates at the upper ice water line (W3) of the vessel, and **in that**
- movement of ice or chunks of broken ice backwards along the hull in the longitudinal direction of the vessel is facilitated by a cross-sectional area of the bulb root section (34) of the bulbous lower bow portion (33) at the given position (S1) that is smaller than a cross-sectional area of the bulbous lower bow portion at a first position (S2) in the longitudinal direction of the vessel forward of the given position (S1) and larger than a cross-sectional area of the bow part (3) under the construction water line (W1) at a second position (S3) in the longitudinal direction of the vessel aft of the given position (S1).

## Patentansprüche

1. Eisbrecher-Wasserfahrzeug, das einen Rumpf mit einem Boden (2), einen Bugteil (3) und einen Heckteil (4) beinhaltet, wobei der Bugteil (3) einen nach vorne geneigten oberen Bugabschnitt (31), einen unteren Wulstbugabschnitt (33) mit einem Wulstwurzelabschnitt (34) an einer vorgegebenen Position (S1) des unteren Wulstbugabschnitts in einer Längsrichtung des Wasserfahrzeugs und einen Zwischenbugabschnitt (32) zwischen dem nach vorne geneigten oberen Bugabschnitt und dem unteren Wulstbugabschnitt beinhaltet, wobei das Eisbrecher-Wasserfahrzeug (1) mit einer Konstruktionswasserlinie (W1), einer oberen Eiswasserlinie (W3) und einer unteren Eiswasserlinie (W2) ausgelegt ist, **dadurch gekennzeichnet, dass**
- eine obere Fläche des unteren Wulstbugabschnitts (33) so angeordnet ist, dass sie sich an oder in der Nähe von der Wasseroberfläche befindet, wenn das Wasserfahrzeug auf der Konstruktionswasserlinie (W1) des Wasserfahrzeugs (1) betrieben wird,
- eine untere Fläche des unteren Wulstbugabschnitts (33) so angeordnet ist, dass sie die Wasseroberfläche durchdringt, wenn das Wasserfahrzeug auf der unteren Eiswasserlinie (W2) des Wasserfahrzeugs betrieben wird,
- ein nach vorne geneigter oberer Bugabschnitt (31) so angeordnet ist, dass er die Wasseroberfläche durchdringt, wenn das Wasserfahrzeug auf der oberen Eiswasserlinie (W3) des Wasserfahrzeugs betrieben wird, und dadurch, dass
- ein Querschnittsbereich des Wulstwurzelabschnitts (34) des unteren Wulstbugabschnitts (33) an der vorgegebenen Position (S1) kleiner als ein Querschnittsbereich des unteren Wulstbugabschnitts an einer ersten Position (S2) in der Längsrichtung des Wasserfahrzeugs, die vor der vorgegebenen Position (S1) liegt, und größer als ein Querschnittsbereich des Bugteils (3) unterhalb der Konstruktionswasserlinie (W1) an einer zweiten Position (S3) in der Längsrichtung des Wasserfahrzeugs, die hinter der vorgegebenen Position (S1) liegt, ist.

2. Eisbrecher-Wasserfahrzeug nach Anspruch 1, **dadurch gekennzeichnet, dass** ein Winkel (ϕ) zwischen dem nach vorne geneigten oberen Bugabschnitt (31) und dem Meeresspiegel, wenn das Wasserfahrzeug auf der oberen Eiswasserlinie (W3) betrieben wird, höchstens 40° beträgt.

3. Eisbrecher-Wasserfahrzeug nach Anspruch 2, **dadurch gekennzeichnet, dass** der Winkel (ϕ) in einem Bereich zwischen 10 und 40° liegt.

4. Eisbrecher-Wasserfahrzeug nach Anspruch 1, **dadurch gekennzeichnet, dass**, wenn das Wasserfahrzeug auf der oberen Eiswasserlinie (W3) betrieben wird, der nach vorne geneigte obere Bugabschnitt (31) den Meeresspiegel an einer dritten Position (S4) in der Längsrichtung des Wasserfahrzeugs schneidet, und dadurch, dass ein Winkel (β1) zwischen der Form des Bugteils (3) und einer vertikalen Ebene an einer Mittellinie (CL) des Wasserfahrzeugs an der dritten Position (S4) in der Längsrichtung des Wasserfahrzeugs mindestens 75° beträgt.

5. Eisbrecher-Wasserfahrzeug nach Anspruch 1 und 4, **dadurch gekennzeichnet, dass** ein Winkel (β2) zwischen der Form des Bugteils (3) und einer vertikalen Ebene an einer Mittellinie (CL) des Wasserfahrzeugs an einer Position, die sich auf halbem Weg zwischen der vorgegebenen Position (S1) und der dritten Position (S4) in der Längsrichtung des Wasserfahrzeugs befindet, höchstens 60° beträgt.

6. Verfahren zum Betreiben eines Eisbrecher-Wasserfahrzeugs, das einen Rumpf mit einem Boden (2), einen Bugteil (3) und einen Heckteil (4) beinhaltet, wobei der Bugteil (3) einen nach vorne geneigten oberen Bugabschnitt (31), einen unteren Wulstbugabschnitt (33) mit einem Wulstwurzelabschnitt (34) an einer vorgegebenen Position (S1) des Wulstbugabschnitts in einer Längsrichtung des Wasserfahrzeugs und einen Zwischenbugabschnitt (32) zwischen dem nach vorne geneigten oberen Bugabschnitt und dem unteren Wulstbugabschnitt beinhaltet, wobei das Eisbrecher-Wasserfahrzeug (1) mit einer Konstruktionswasserlinie (W1), einer oberen Eiswasserlinie (W3) und einer unteren Eiswasserlinie (W2) ausgelegt ist, **dadurch gekennzeichnet, dass** gemäß dem Verfahren
- eine obere Fläche des unteren Wulstbugabschnitts (33) an oder in der Nähe von der Wasseroberfläche gehalten wird, wenn das Wasserfahrzeug auf der Konstruktionswasserlinie (W1) des Wasserfahrzeugs betrieben wird,
- eine untere Fläche des unteren Wulstbugabschnitts (33) die Wasseroberfläche durchdringt, wenn das Wasserfahrzeug auf der unteren Eiswasserlinie (W2) des Wasserfahrzeugs betrieben wird,
- der nach vorne geneigte obere Bugabschnitt (31) die Wasseroberfläche durchdringt, wenn das Wasserfahrzeug auf der oberen Eiswasserlinie (W3) des Wasserfahrzeugs betrieben wird, und dadurch, dass
- eine Bewegung von Eis oder Brocken zerbrochenen Eises nach hinten entlang des Rumpfs in der Längsrichtung des Wasserfahrzeugs durch einen Querschnittsbereich des Wulstwurzelabschnitts (34) des unteren Wulstbugabschnitts (33) an der vorgegebenen Position (S1) ermöglicht wird, der kleiner als ein Querschnittsbereich des unteren Wulstbugabschnitts an einer ersten Position (S2) in der Längsrichtung des Wasserfahrzeugs, die vor der vorgegebenen Position (S1) liegt, und größer als ein Querschnittsbereich des Bugteils (3) unterhalb der Konstruktionswasserlinie (W1) an einer zweiten Position (S3) in der Längsrichtung des Wasserfahrzeugs, die hinter der vorgegebenen Position (S1) liegt, ist.

## Revendications

1. Vaisseau de déglaçage, qui inclut une coque avec un fond (2), une partie de proue (3) et une partie de poupe (4), laquelle partie de poupe (3) inclut une portion de poupe supérieure inclinée vers l'avant (31), une portion de proue inférieure bulbeuse (33) avec une section de racine de bulbe (34) à une position donnée (S1) de la portion de proue inférieure bulbeuse dans une direction longitudinale du vaisseau, et une portion de proue intermédiaire (32) entre la partie de proue supérieure inclinée vers l'avant et la portion de proue inférieure bulbeuse, lequel vaisseau de déglaçage (1) est conçu avec une ligne de flottaison de construction (W1), une ligne de flottaison de glace supérieure (W3) et une ligne de flottaison de glace inférieure (W2), **caractérisé en ce que**
- une surface supérieure de la portion de proue inférieure bulbeuse (33) est disposée afin d'être au niveau de ou à proximité de la surface de l'eau lorsque le vaisseau fonctionne à la ligne de flottaison de construction (W1) du vaisseau (1),
- une surface inférieure de la portion de proue inférieure bulbeuse (33) est disposée afin de pénétrer la surface de l'eau lorsque le vaisseau fonctionne à la ligne de flottaison de glace inférieure (W2) du vaisseau,
- la portion de proue supérieure inclinée vers l'avant (31) est disposée afin de pénétrer la surface de l'eau lorsque le vaisseau fonctionne à la ligne de flottaison de glace (W3) du vaisseau et **en ce que**
- une zone de section transversale de la section de racine de bulbe (34) de la portion de proue inférieure bulbeuse (33) à la position donnée (S1) est plus petite qu'une zone de section transversale de la portion de proue inférieure bulbeuse à une première position (S2) dans la direction longitudinale du vaisseau en avant de la position donnée (S1) est plus grande qu'une zone de section transversale de la partie de proue (3) sous la ligne de flottaison de construction (W1) à une seconde position (S3) dans la direction longitudinale du vaisseau en arrière de la position donnée (S1).

2. Vaisseau de déglaçage selon la revendication 1, **caractérisé en ce qu'**un angle (ϕ) entre la portion de proue supérieure inclinée vers l'avant (31) et le niveau de la mer lorsque le vaisseau fonctionne à la ligne de flottaison de glace supérieure (W3) est au maximum de 40°.

3. Vaisseau de déglaçage selon la revendication 2, **caractérisé en ce que** l'angle (ϕ) est dans une plage comprise entre 10...40°.

4. Vaisseau de déglaçage selon la revendication 1, **caractérisé en ce que** lorsque le vaisseau fonctionne à la ligne de flottaison de glace supérieure (W3) la portion de proue supérieure inclinée vers l'avant (31) coupe en intersection le niveau de la mer à une troisième position (S4) dans la direction longitudinale du vaisseau, et **en ce que** un angle (β1) entre la forme de la partie de proue (3) et un plan vertical au niveau d'une ligne centrale (CL) du vaisseau à la troisième position (S4) dans la direction longitudinale du vaisseau est d'au moins 75°.

5. Vaisseau de déglaçage selon la revendication 1 et 4, **caractérisé en ce que** un angle (β2) entre la forme de la partie de proue (3) et un plan vertical au niveau d'une ligne centrale (CL) du vaisseau à une position à mi-chemin entre la position donnée (S1) et la troisième position (S4) dans la direction longitudinale du vaisseau est au maximum de 60°.

6. Procédé de fonctionnement d'un vaisseau de déglaçage, qui inclut une coque avec un fond (2), une partie de proue (3) et une partie de poupe (4), laquelle partie de poupe (3) inclut une portion de poupe supérieure inclinée vers l'avant (31), une portion de proue inférieure bulbeuse (33) avec une section de racine de bulbe (34) à une position donnée (S1) de la portion de proue inférieure bulbeuse dans une direction longitudinale du vaisseau, et une portion de proue intermédiaire (32) entre la partie de proue supérieure inclinée vers l'avant et la portion de proue inférieure bulbeuse, lequel vaisseau de déglaçage (1) est conçu avec une ligne de flottaison de construction (W1), une ligne de flottaison de glace supérieure (W3) et une ligne de flottaison de glace inférieure (W2), **caractérisé en ce que** selon le procédé
- une surface supérieure de la portion de proue inférieure bulbeuse (33) est gardée au niveau de ou à proximité de la surface de l'eau lorsque le vaisseau fonctionne à la ligne de flottaison de construction (W1) du vaisseau,
- une surface inférieure de la portion de proue inférieure bulbeuse (33) pénètre la surface de l'eau lorsque le vaisseau fonctionne à la ligne de flottaison de glace inférieure (W2) du vaisseau,
- la portion de proue supérieure inclinée vers l'avant (31) pénètre la surface de l'eau lorsque le vaisseau fonctionne à la ligne de flottaison de glace (W3) du vaisseau et **en ce que**
- le mouvement de la glace ou de blocs de glace brisée vers l'arrière le long de la coque dans la direction longitudinale du vaisseau est facilité par une zone de section transversale de la section de racine de bulbe (34) de la portion de proue inférieure bulbeuse (33) à la position donnée (S1) qui est plus petite qu'une zone de section transversale de la portion de proue inférieure bulbeuse à une première position (S2) dans la direction longitudinale du vaisseau en avant de la position donnée (S1) est plus grande qu'une zone de section transversale de la partie de proue (3) sous la ligne de flottaison de construction (W1) à une seconde position (S3) dans la direction longitudinale du vaisseau en arrière de la position donnée (S1).
